# EUROPEAN PATENT SPECIFICATION

(11) **EP 0 512 694 B1**
(45) Date of publication and mention of the grant of the patent: **03.09.1997**
(21) Application number: 92303290.8
(22) Date of filing: 13.04.1992
(51) Int. Cl.: G01K 7/22, G01K 13/02

(54) **Sensing device for temperatures**
Temperatursensor
Capteur de température

(30) Priority: 11.04.1991 GB 9107881
(43) Date of publication of application: 11.11.1992
(73) Proprietor: DE BEERS INDUSTRIAL DIAMOND DIVISION (PROPRIETARY) LIMITED, Johannesburg (ZA)
(72) Inventor: Jones, Barbara Lynn, Forest Park, Bracknell RG12 3TX (GB)
(74) Representative: Nicholls, Michael John

(56) References cited:
- US-A- 4 029 472
- US-A- 4 389 876
- PATENT ABSTRACTS OF JAPAN vol. 9, no. 151 (P-367)26 June 1985 & JP-A-60 029 650
- Section Ch, Week 8814, Derwent Publications Ltd., London, GB; Class L03, AN 88-093132 & EP-A-262 601

## Description

This invention relates to a sensing device and more particularly to a thermistor.

A thermistor is a temperature sensitive resistor used for measuring the temperature of various environments. It is known from the literature that semi-conducting diamond can be used as a thermistor. Diamond is extremely resistant to erosion and abrasion and so is useful for measuring the temperature of various hostile environments. It also operates as a thermistor at higher temperatures than conventional metal oxide thermistors. The high thermal diffusivity of diamond allows a faster thermal response than metal oxide thermistors and faster than silicon or germanium in the temperature range 10°K to 700°K

The absolute value of resistance of the thermistor is a measure of the temperature of the environment in which it is placed.

United States Patent No. 3,435,399 describes a thermistor device comprising a semi-conducting single crystal diamond and two electrically conductive leads bonded to the crystal to provide quasiohmic contact (non-rectifying) therewith.

With known thermistors, there is close coupling between the thermistor element and its housing or mounting. Connections are made to the thermistor element using a relatively large thermal mass, creating leakage paths. The sensitivity of such devices is poor.

US 4,389,876 discloses a temperature sensor in which a thermistor is deposited on a substrate which is rigidly mounted in a casing.

According to the present invention there is provided a sensing device comprising a thin sheet of a sensing material located partially or wholly in a housing which allows a fluid to pass therethrough and at least two spaced, thin, electrical leads connected to different points on the sheet, characterised in that the electrical leads are flexible and the thin sheet of sensing material is suspended in the housing so as to allow it to float in a fluid medium.

The invention will be further described by way of example only with reference to the accompanying drawings, in which:-
Figure 1 illustrates a perspective view of an embodiment of a sensing device of the invention;
Figure 2 illustrates a perspective view of a second embodiment of a sensing device of the invention; and
Figure 3 illustrates a perspective view of a third embodiment of a sensing device of the invention.

The sensing device will preferably be a thermistor in which event the thin sheet will typically be made of a metal oxide, silicon, germanium or diamond. Diamond is the preferred material.

The sensing device of the invention may be used for radiation detection in a conduction/counting mode.

The thickness of the sheet will generally not exceed 1mm, and will typically be in the range of 10 microns to 1mm. A preferred thickness is about 100 microns. The sheet will typically be square, rectangular, oval, circular or the like.

The electrical leads are thin, e.g. no more than 100 microns, preferably 50 to 100 microns, in thickness, to minimise thermal mass and leakage paths in use.

The thin sheet of sensing material is located partially or wholly in the housing. It is suspended and is thus able to float in a fluid medium. The housing, particularly when the thin sheet of sensing material is located wholly within the housing, minimises the risk of damage to the sheet and/or leads.

In one form of the invention, the housing is cylindrical in shape and has openings in opposite sides thereof, opposite corners of the sheet being located in the openings. The location of corners is such that the sheet is capable of flapping in a fluid medium.

In another form of the invention, the thin sheet of sensing material is suspended wholly or partially in the housing by means of the leads. The housing may be cylindrical in shape having openings to allow fluid to pass therethrough or it may comprise a frame, open on opposite sides, and having sheets of mesh or like material secured to the frame and extending across the open sides.

In yet another form of the invention, the housing comprises two cylindrical sections, each of which has outer and inner ends, the inner ends being formed with recesses for receiving opposite edges of the sheet of sensing material. The two sections may be joined by one or more bridges.

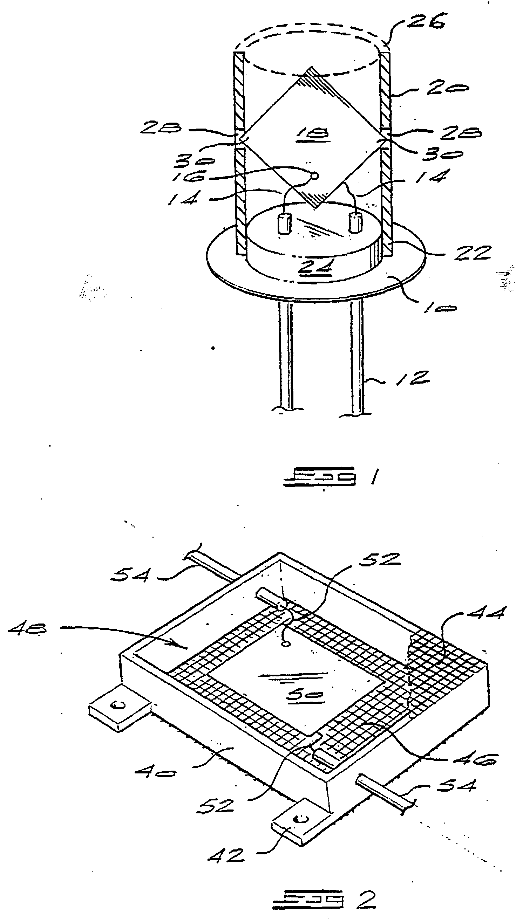

An embodiment of the invention will now be described with reference to Figure 1 of the accompanying drawing. Referring to this drawing, there is shown a thermistor comprising a base 10 of an insulating material having spaced pipes 12 extending therethrough. Passing through the pipes are flexible electrical leads 14. The leads 14 are of the order of 50 microns in thickness to minimise thermal mass and leakage paths.

The ends 16 of the leads are bonded to opposite sides of a thin diamond plate 18.

Extending up from the base 10 is a cylindrical shield 20. The shield will typically be made of ceramic or plastic. The end 22 of the shield fits over the projection 24 of the base 10 with a force fit. Intermidiate the end 22 and the end 26 of the shield 20 are openings or holes 28. At least two holes 28, spaced 180° from each other, are provided Preferably there are more than two holes to ensure free flow of fluid into and out of the cylinder 20.

The corners 30 of the sheet 18 are located in the openings 28. The dimensions of the sheet 18 and the diameter of the shield 20 are such that the sheet 18 is supported in the openings 28 and is allowed to float and rotate about its support points in a fluid medium. The shield nevertheless provides protection to minimise damage occurring to the sheet, the thin leads and the connections the leads make with the sheet.

The sensing device is a thermistor which can be used in fluid mediums where sensitivity is important. As mentioned above, the thin wires minimise thermal mass and leakage paths. Further, the thin diamond sheet 18 provides a large aspect ratio of active or sensing element to leads. These features make the thermistor very sensitive. A sensitive thermistor has application, for example, in high speed situations such as in automative feedback control mechanisms and in gas and liquid flow determinations.

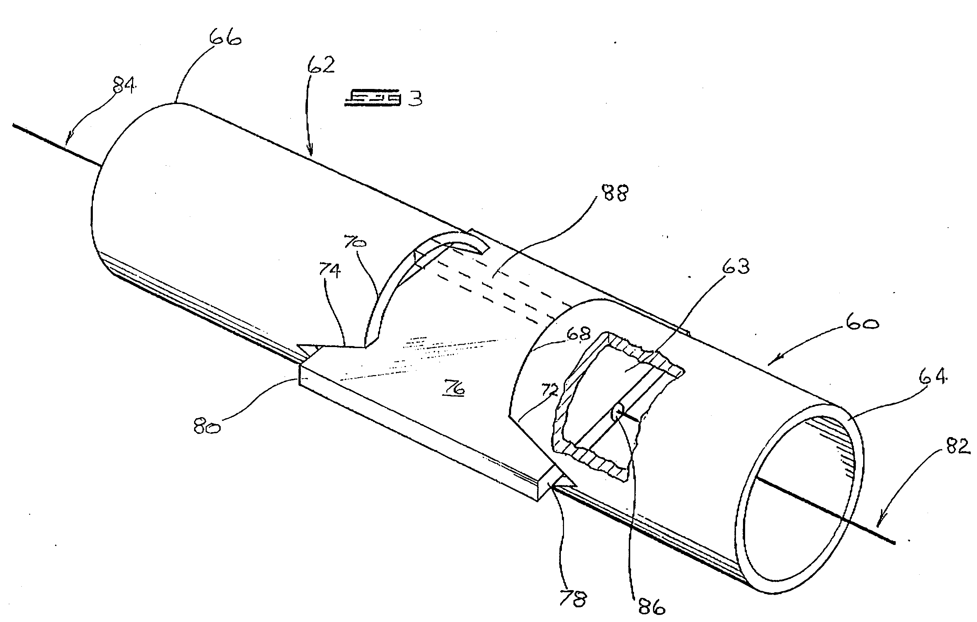

Figure 2 illustrates a second embodiment of the invention. Referring to this figure, there is shown a frame 40 which may be made of metal or other suitable material having spaced flanges 42 by means of which the frame may be secured to a base or support. The frame is open on opposite sides thereof. These open sides are closed by mesh sheets 44 and 46 secured to the frame.

A cavity 48 is defined within the frame 40 and the mesh sheets 44, 46. Located in this cavity is a diamond sensing sheet 50 held in suspension therein by means of flexible, thin electrical leads 52. These leads pass into the frame through insulating connector posts 54.

The diamond sensing sheet is thus able to move and flap relatively freely within the cavity, but is restrained from too vigorous a movement by the mesh sheets.

The thermistor of this embodiment of the invention exhibits the same advantages as those of the Figure 1 embodiment.

A third embodiment of the invention is illustrated by Figure 3. In this embodiment, the housing comprises two cylindrical sections 60, 62, section 62 of which is partially broken away at 63 for illustration purposes only. The sections have outer, flat ends 64, 66 and inner ends 68,70 which are formed with wedge-shaped recesses 72, 74. A thin sheet of sensing material 76 is located in the housing such that opposite edges 78, 80 are received by the recesses 72, 74. The location of the edges in these recesses is loose such that movement of the sheet in a fluid medium is possible.

Ends of flexible electrical leads 82, 84 are joined to the edges 78, 80, respectively. Only the connection of lead 82 to the edge 78 at 86 is illustrated by the drawing. The other lead connection is the same

The sections 60, 62 may be joined to any suitable outer support such as a large container by any suitable bridging means such as bars, rods, posts or the like.

The two sections 60, 62 can also be joined to each other by means of one or more bridges, one of which 88 is illustrated by dotted lines in Figure 3.

## Claims

1. A sensing device comprising a thin sheet (18) of a sensing material located partially or wholly in a housing (20) which allows a fluid to pass therethrough and at least two spaced, thin, electrical leads (14) connected to different points on the sheet (18), characterised in that the electrical leads are flexible and the thin sheet of sensing material is suspended in the housing so as to allow it to float in a fluid medium.

2. A sensing device according to claim 1 wherein the housing (20) is cylindrical in shape and has openings (28) in opposite sides thereof, opposite corners (30) of the sheet (18) being located in the openings (28).

3. A sensing device according to claim 1 wherein the thin sheet (18) of sensing material is suspended wholly or partially in the housing (40) by means of the leads (52).

4. A sensing device according to claim 3 wherein the housing (20) is cylindrical in shape and has openings (28) to allow fluid to pass therethrough.

5. A sensing device according to claim 3 wherein the housing comprises a frame (40), open on opposite sides, and having sheets (44, 46) of mesh or like material secured to the frame and extending across the open sides.

6. A sensing device according to claim 1 wherein the housing comprises two cylindrical sections (60,62), each of which has outer and inner ends (64,66,68,70), the inner ends (68,70) being formed with recesses (72, 74) for receiving opposite edges (18,80) of the sheet (76) of sensing material.

7. A sensing device according to claim 6 wherein the two sections (60,62) are joined by one or more bridges (88).

8. A sensing device according to any one of the preceding claims wherein the sheet (18,50,76) of sensing material has a thickness not exceeding 1mm.

9. A sensing device according to any one of the preceding claims wherein the electrical leads (14,52,82,84) have a thickness of no more than 100 microns.

10. A sensing device according to any one of claims 1 to 8 wherein the electrical leads (14,52,82,84) have a thickness in the range 50 to 100 microns.

11. A sensing device according to any one of the preceding claims which is a thermistor.

12. A sensing device according to any one of the preceding claims wherein the sheet (18, 50, 76) of sensing material is metal oxide, silicon, germanium or diamond.

## Patentansprüche

1. Sensorvorrichtung mit einem dünnen Blatt (18) eines Sensor-materials, das sich teilweise oder ganz in einem Gehäuse (20) befindet, das es einem Fluid ermöglicht, hindurch zu fließen, und wenigstens zwei mit Zwischenraum angeordneten, dünnen elektrischen Leitungen (14), die mit verschiedenen Stellen des Blattes (18) verbunden sind, dadurch gekennzeichnet, daß die elektrischen Leitungen biegsam sind und das dünne Blatt aus Sensormaterial in dem Gehäuse hängend so befestigt ist, daß es in einem fluiden Medium schwimmen kann.

2. Sensorvorrichtung nach Anspruch 1, wobei das Gehäuse (20) zylindrische Form hat und Öffnungen (28) an gegenüberliegenden Seiten aufweist, wobei sich gegenüberliegende Ecken (30) des Blattes (18) in den Öffnungen angeordnet sind.

3. Sensorvorrichtung nach Anspruch 1, wobei das dünne Blatt (18) aus Sensormaterial ganz oder teilweise in dem Gehäuse (40) an den Leitungen (52) hängend befestigt ist.

4. Sensorvorrichtung nach Anspruch 3, wobei das Gehäuse (20) zylindrische Form hat und Öffnungen (28) aufweist, durch die ein Fluid hindurchfließen kann.

5. Sensorvorrichtung nach Anspruch 3, wobei das Gehäuse einen Rahmen (40) aufweist, der an gegenüberliegenden Seiten offen ist und Bahnen (44, 46) aus maschenartigem oder ähnlichem Material aufweist, die an dem Rahmen befestigt sind und sich über die offenen Seiten erstrecken.

6. Sensorvorrichtung nach Anspruch 1, wobei das Gehäuse zwei zylindrische Sektionen (62) aufweist, von denen beide äußere und innere Enden (64, 66, 68, 70) aufweisen, wobei die inneren Enden (68, 70) mit Aussparungen (72, 74) ausgebildet sind, um gegenüberliegende Kanten (18, 80) des Blattes (76) aus Sensormaterial aufzunehmen.

7. Sensorvorrichtung nach Anspruch 6, wobei die zwei Sektionen (60, 62) durch eine oder mehrere Brücken (88) miteinander verbunden sind.

8. Sensorvorrichtung nach einem der vorhergehenden Ansprüche, wobei das Blatt (18, 50, 76) aus Sensormaterial eine Dicke aufweist, die 1 mm nicht übersteigt.

9. Sensorvorrichtung nach einem der vorhergehenden Ansprüche, wobei die elektrischen Leitungen (14, 52, 82, 84) eine Dicke aufweisen, die 100 Mikrometer nicht übersteigt.

10. Sensorvorrichtung nach einem der Ansprüche 1 bis 8, wobei die elektrischen Leitungen (14, 52, 82, 84) eine Dicke im Bereich von 50 bis 100 Mikrometer aufweisen.

11. Sensorvorrichtung nach einem der vorhergehenden Ansprüche, die ein Thermistor ist.

12. Sensorvorrichtung nach einem der vorhergehenden Ansprüche, wobei das Blatt (18, 50, 76) aus Sensormaterial aus Metalloxid, Silizium, Germanium oder Diamant besteht.

## Revendications

1. Capteur de température comprenant une feuille mince (18) d'un matériau de détection située en partie ou en totalité dans un logement (20) permettant le passage d'un fluide et au moins deux conducteurs électriques minces espacés entre eux (14) connectés en différents points sur la feuille (18), caractérisé en ce que les conducteurs électriques sont souples et la feuille mince en matériau de détection est accrochée dans le logement de façon à permettre son flottement dans un milieu liquide.

2. Capteur selon la revendication 1, dans lequel le logement (20) est de forme cylindrique et comporte des ouvertures (28) dans ses côtés opposés, les coins opposés (30) de la feuille (18) étant situés dans les ouvertures (28).

3. Capteur selon la revendication 1, dans lequel la feuille mince (18) en matériau de détection est accrochée en partie ou partiellement dans le logement (20) au moyen des conducteurs (52).

4. Capteur selon la revendication 3, dans lequel le logement (20) est de forme cylindrique et comporte des ouvertures (28) pour permettre le passage du fluide à travers celles-ci.

5. Capteur selon la revendication 3, dans lequel le logement comporte un châssis (40) ouvert sur les côtés opposés et avec des feuilles (44, 46) en mailles ou en matériau analogue fixées sur le châssis et s'étendant sur les côtés opposés.

6. Capteur selon la revendication 1, dans lequel le logement comprend deux sections cylindriques (60, 62) dont chacune présente des extrémités extérieures et intérieures (64, 66, 68, 70), les extrémités intérieures (68, 70) étant dotées d'évidements (72, 74) pour recevoir les bords opposés (18, 80) de la feuille (76) du matériau de capteur.

7. Capteur selon la revendication 6, dans lequel les deux sections (60, 62) sont assemblées par un ou plusieurs ponts (88).

8. Capteur selon l'une quelconque des revendications précédentes, dans lequel la feuille (18, 50, 76) en matériau de détection a une épaisseur ne dépassant pas 1 mm.

9. Capteur selon l'une quelconque des revendications précédentes, dans lequel les conducteurs électriques (14, 52, 82, 84) ont une épaisseur ne dépassant pas 100 µm.

10. Capteur selon l'une quelconque des revendications 1 à 8, dans lequel les conducteurs électriques (14, 52, 82, 84) ont une épaisseur dans la plage de 50 à 100 µm.

11. Capteur selon l'une quelconque des revendications précédentes, ce capteur étant un thermistor.

12. Capteur selon l'une quelconque des revendications précédentes, dans lequel la feuille (18, 50, 76) de matériau de détection est un oxyde métallique, du silicium, du germanium ou un diamant.
